# FASCICULE DE BREVET EUROPEEN

(11) **EP 1 398 939 B1**
(45) Date de publication et mention de la délivrance du brevet: **31.01.2007**
(21) Numéro de dépôt: 03291788.2
(22) Date de dépôt: 18.07.2003
(51) Int. Cl.: H04L 29/06, H04L 12/28, H04L 12/56

(54) **Procédé et serveur d'attibution de ressources d'un réseau local à un terminal, per discrimination de type**
Verfahren und Server zur Zuteilung von Netzwerkressourcen an ein Endgerät unter Unterscheidung zwischen Endgeräte-Typen
Method and server for allocating network resources to a terminal using terminal type differentiation

(30) Priorité: 05.09.2002 FR 0210970
(43) Date de publication de la demande: 17.03.2004
(73) Titulaire: ALCATEL, 75008 Paris (FR)
(72) Inventeur: Vergnaud, Gérard, 95130 Franconville (FR)
(74) Mandataire: Chaffraix, Sylvain

(56) Documents cités:
- US-A- 5 602 916
- US-A1- 2002 029 280
- US-A1- 2002 061 748
- US-A1- 2002 118 699
- BAHL P ET AL: "PAWNS: SATISFYING THE NEED FOR UBIQUITOUS SECURE CONNECTIVITY AND LOCATION SERVICES" IEEE WIRELESS COMMUNICATIONS, IEEE SERVICE CENTER, PISCATAWAY, NJ, US, vol. 9, no. 1, février 2002 (2002-02), pages 40-48, XP001077105 ISSN: 1070-9916
- AFIFI H ET AL: "Methods for IPv4-IPv6 transition" COMPUTERS AND COMMUNICATIONS, 1999. PROCEEDINGS. IEEE INTERNATIONAL SYMPOSIUM ON RED SEA, EGYPT 6-8 JULY 1999, LOS ALAMITOS, CA, USA,IEEE COMPUT. SOC, US, 6 juillet 1999 (1999-07-06), pages 478-484, XP010555073 ISBN: 0-7695-0250-4
- WILJAKKA J: "TRANSITION TO IPV6 IN GPRS AND WCDMA MOBILE NETWORKS" IEEE COMMUNICATIONS MAGAZINE, IEEE SERVICE CENTER. PISCATAWAY, N.J, US, vol. 40, no. 4, avril 2002 (2002-04), pages 134-140, XP001102471 ISSN: 0163-6804
- RESCORLA E.; SCHIFFMAN A.: 'The Secure HyperText Transfer Protocol' IETF STANDARD, INTERNET ENGINEERING TASK FORCE, IETF, CH Août 1999, XP015008443

## Description

L'invention concerne le domaine des communications entre terminaux au sein de réseaux, et plus particulièrement l'attribution de ressources d'un réseau local à des terminaux.

De nombreux organismes publics ou privés, et de nombreuses entreprises ou groupes d'entreprises disposent aujourd'hui de réseaux locaux de communications filaires, tels que les LANs (pour « Local Area Networks »), ou sans fil, tels que les WLANs (pour « Wireless LANs »). Ces réseaux locaux permettent aux personnes (utilisateurs) qui se connectent à l'un de leurs points d'accès avec leur terminal, équipé par exemple d'une carte (W)LAN amovible ou intégrée, d'accéder à des informations locales.

Mais, certains réseaux locaux permettent également à des utilisateurs habilités, d'accéder à d'autres réseaux de communications, comme par exemple des réseaux publics de données de type Internet/IP et/ou des réseaux publics de téléphonie de type RTC ou PSTN.

Il est même possible dans certains cas de coupler un réseau local à un réseau privé, via les réseaux publics. Dans ce cas, le réseau local appartient généralement au propriétaire du réseau privé auquel il est couplé. Lorsque le propriétaire est une entreprise, cela permet aux personnes qu'elle a habilitées, généralement certains de ses salariés, d'accéder à distance aux terminaux du réseau d'entreprise, et donc à certaines de ses données, et parfois aux services mis à disposition au sein dudit réseau d'entreprise. Cependant, afin de sécuriser les données de l'entreprise, seules peuvent bénéficier de cette possibilité les personnes qui disposent d'un terminal configuré de manière à établir des communications cryptées, selon un format choisi, avec le réseau local et le réseau d'entreprise.

Seul un petit nombre de personnes pouvant utiliser les ressources des réseaux locaux, dédiées aux connections aux réseaux distants, qu'ils soient de type réseau privé, réseau de données ou réseau de téléphonie, lesdites ressources sont généralement sous-employées alors même que de nombreuses autres personnes, présentent dans leurs zones de couverture, pourraient en profiter.

Document US2002/0029280 divulgue l'utilisation des règles pour contrôler l'accès d'un utilisateur aux éléments d'un réseau.

L'invention a donc pour but de remédier à cet inconvénient.

L'invention est définie par l'objet des revendications indépendantes.

Elle propose à cet effet un serveur de traitement dédié à l'attribution de ressources d'un réseau local à des terminaux d'utilisateurs, et destiné à être couplé à au moins un point d'accès de ce réseau local, par voie filaire (par exemple à l'aide d'un lien Ethernet) ou par voie d'ondes (par exemple à l'aide d'un lien radio de type 802.11b).

Ce serveur comporte des moyens de contrôle permettant, d'une part, de classer les terminaux, qui tentent d'établir une communication avec le réseau local, dans un premier ou un second groupe selon que cette communication est ou n'est pas cryptée dans au moins un format choisi, et d'autre part, d'attribuer des ressources du réseau local (y compris physiques) à des terminaux qui tentent d'établir une communication avec celui-ci, en fonction de leur classement dans l'un des premier et second groupes.

Avantageusement, les moyens de contrôle sont agencés de manière à déterminer l'adresse MAC (pour « Medium Access Control ») de chaque terminal tentant d'établir une communication avec le réseau local, et le serveur comprend des moyens permettant d'attribuer une adresse IP au terminal dont l'adresse MAC a été déterminée. Ces moyens d'attribution sont préférentiellement de type DHCP (pour « Dynamic Host Configuration Protocol »).

Préférentiellement, le serveur comprend également une mémoire stockant une table qui contient des adresses MAC primaires associées à des premiers terminaux agencés de manière à échanger des trames de données cryptées selon le format choisi. Cette table peut également contenir des adresses MAC secondaires associées à des seconds terminaux agencés de manière à échanger des trames de données non cryptées.

Les moyens de contrôle sont alors préférentiellement agencés de manière à déterminer si une adresse MAC extraite d'une trame reçue est une adresse MAC primaire ou plutôt secondaire. Dans l'affirmative, les moyens de contrôle adressent aux moyens d'attribution une requête d'attribution au terminal correspondant à l'adresse MAC primaire ou secondaire, d'une adresse IP primaire qui va lui permettre d'établir une liaison avec au moins un premier ou au moins un second réseau distant. En revanche, dans la négative, les moyens de contrôle adressent aux moyens d'attribution une requête d'attribution au terminal correspondant à l'adresse MAC extraite, lequel est alors appelé troisième terminal, d'une adresse IP secondaire lui permettant d'établir une liaison avec au moins un second réseau distant.

Préférentiellement, les premiers terminaux sont rattachés au premier réseau distant, lequel est éventuellement raccordé à au moins un second réseau distant. Il s'agit, par exemple, de terminaux d'entreprise, tels que des micro-ordinateurs portables attribués à des salariés de l'entreprise. Par ailleurs, les seconds terminaux appartiennent préférentiellement à des utilisateurs connus du premier réseau distant. Il s'agit, par exemple, de téléphones portables appartenant à des salariés de l'entreprise ou à des personnes rattachées à celle-ci.

Avantageusement, chaque premier réseau distant est préférentiellement choisi dans un groupe comprenant les réseaux privés, les réseaux de données IP et les réseaux de téléphonie (RTC ou autre), et chaque second réseau distant est préférentiellement choisi dans un groupe comprenant les réseaux de données IP et les réseaux de téléphonie (RTC ou autre).

Selon une autre caractéristique de l'invention, les moyens de contrôle sont agencés de manière à attribuer au moins deux niveaux de priorité d'allocation de ressources du réseau local selon que la communication est ou non cryptée dans le format choisi. Pour ce faire, il est avantageux de stocker chaque adresse MAC de la table en correspondance d'au moins un niveau de priorité. Par exemple, un premier niveau de priorité est attribué aux premiers terminaux associés à des adresses MAC primaires et un second niveau de priorité est attribué aux seconds terminaux associés à des adresses MAC secondaires. Les moyens de contrôle peuvent être également agencés pour attribuer au moins un troisième niveau de priorité d'allocation de ressources du réseau local, par exemple aux troisièmes terminaux qui établissent des communications non cryptées et dont l'adresse MAC n'appartient pas à la table. D'autres niveaux supérieurs au troisième peuvent être également envisagés en fonction des besoins de l'application.

Préférentiellement les niveaux de priorité portent au moins sur la largeur de bande passante attribuée aux terminaux, celle-ci pouvant, par exemple, décroître du premier niveau vers le troisième niveau, de sorte que soient privilégiés les premiers terminaux. Mais, les moyens de contrôle peuvent faire évoluer de façon dynamique l'attribution des largeurs de bande passante (ou de tout autre niveau de priorité), compte tenu du trafic (ou des ressources disponibles). Ainsi, lorsque le trafic est faible, un second niveau peut être remplacé par un premier niveau et un troisième niveau peut être remplacé par un second niveau, et lorsque le trafic est très faible, un troisième niveau peut être remplacé par un premier niveau. L'inverse est également possible lorsque le trafic est très important, un premier niveau pouvant être remplacé par un second niveau, voire même un troisième niveau, ou un second niveau pouvant être remplacé par un troisième niveau.

Mais, les niveaux de priorité peuvent également porter sur des droits d'accès à des bases de données locales ou distantes, et notamment à des données audio et/ou vidéo, par exemple dans le cadre d'applications de type « vidéo à la demande », ou encore à des droits d'accès à des ressources physiques telles que des terminaux dédiés ou des imprimantes.

Le serveur selon l'invention peut par exemple être intégré dans un routeur afin de masquer le plan d'adressage du premier réseau distant (par exemple le réseau privé d'une entreprise). Mais il peut être également intégré dans un point d'accès.

L'invention porte également sur une installation de communications comportant au moins un réseau local, par exemple de type sans fil (WLAN), accessible via un ou plusieurs points d'accès, au moins un premier réseau distant, au moins un second réseau distant, ainsi qu'un serveur de traitement du type de celui présenté ci-avant et couplé à l'un au moins des points d'accès et auxdits premier et second réseaux distants.

Dans cette installation, le serveur de traitement est préférentiellement couplé au premier réseau distant via un réseau privé virtuel (ou VPN pour « Virtual Private Network »). Mais en variante, il pourrait être couplé au premier réseau distant via un serveur d'accès distant (ou RAS pour « Remote Access Server »).

L'invention porte en outre sur un procédé d'attribution de ressources d'un réseau local à des terminaux d'utilisateurs, via au moins un point d'accès, consistant, lorsqu'un terminal tente d'établir une liaison avec le réseau local, d'une part, à classer ce terminal dans un premier ou un second groupe selon que la liaison est ou non cryptée dans au moins un format choisi, et d'autre part, à attribuer des ressources du réseau local au terminal en fonction de son classement dans l'un des premier et second groupes.

Avantageusement, lorsqu'un terminal tente d'établir une liaison avec le réseau local, on détermine son adresse MAC, puis on attribue une adresse IP au terminal qui possède cette adresse MAC.

Préférentiellement, on stocke une table contenant des adresses MAC primaires associées à des premiers terminaux agencés de manière à échanger des trames de données cryptées selon le format choisi. De préférence, cette table contient également des adresses MAC secondaires associées à des seconds terminaux agencés de manière à échanger des trames de données non cryptées.

En présence d'une telle table, on peut déterminer si une adresse MAC extraite d'une trame reçue est une adresse MAC primaire ou secondaire, et dans l'affirmative attribuer au terminal correspondant à cette adresse MAC primaire ou secondaire, une adresse IP primaire lui permettant d'établir une liaison avec au moins un premier réseau distant ou au moins un second réseau distant, et dans la négative attribuer au terminal correspondant à l'adresse MAC, appelé troisième terminal, une adresse IP secondaire lui permettant d'établir une liaison avec au moins un second réseau distant.

Selon une autre caractéristique de l'invention, on attribue au moins deux niveaux de priorité d'allocation de ressources du réseau local, selon que la communication est ou non cryptée dans le format choisi. Dans ce cas, il est avantageux que les adresses MAC de la table soient stockées en correspondance d'au moins un niveau de priorité, un premier niveau de priorité pouvant alors être attribué aux premiers terminaux associés à des adresses MAC primaires et un second niveau de priorité pouvant être attribué aux seconds terminaux associés à des adresses MAC secondaires. On peut également attribuer un troisième niveau de priorité d'allocation de ressources du réseau local aux troisièmes terminaux.

Préférentiellement les niveaux de priorité portent au moins sur la largeur de bande passante attribuée aux terminaux, celle-ci pouvant, par exemple, décroître du premier niveau vers le troisième niveau. Mais, l'attribution des largeurs peut également évoluer de façon dynamique, compte tenu du trafic (ou ressources disponibles).

L'invention peut être mise en oeuvre dans les réseaux publics de communications de type PSTN (ou RTC), PLMN, et en particulier dans les réseaux publics de communications pour équipements mobiles choisis parmi les réseaux GSM, GPRS et UMTS, ainsi que dans les réseaux privés choisis parmi PABX et les passerelles de communication privées (plus connues sous l'expression anglaise « Residential gateway ») pouvant mettre en oeuvre des accès fixes, et sans fil tels que WLAN, Bluetooth ou UWB (pour « Ultra Wide Band »).

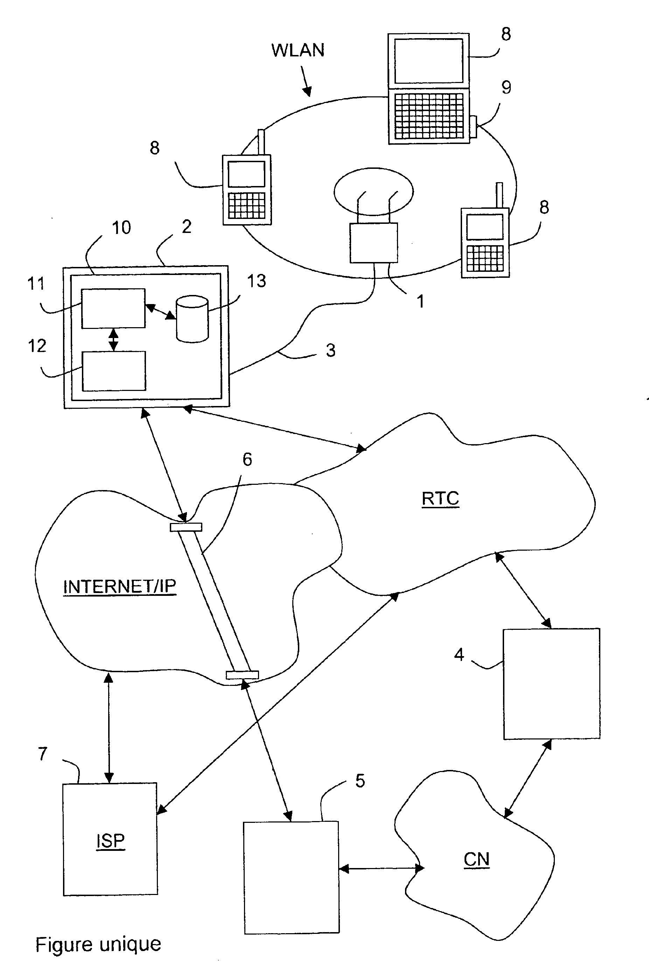

D'autres caractéristiques et avantages de l'invention apparaîtront à l'examen de la description détaillée ci-après, et de l'unique figure annexée qui illustre de façon schématique un exemple d'installation de communications équipée d'un serveur de traitement selon l'invention. Cette figure pourra non seulement servir à compléter l'invention, mais aussi contribuer à sa définition, le cas échéant.

L'installation illustrée sur l'unique figure comporte tout d'abord un réseau privé CN et au moins un réseau local WLAN, appartenant par exemple à un groupe d'entreprises, un réseau public de téléphonie RTC, appartenant à un opérateur de téléphonie, et un réseau public de données INTERNET/IP.

Le réseau local WLAN comporte un ou plusieurs points d'accès 1, raccordés à un routeur périphérique (ou « edge router ») 2, lui-même raccordé au réseau public de téléphonie RTC et au réseau public de données INTERNET/IP. Dans l'exemple illustré, le point d'accès 1 est raccordé au routeur périphérique 2 par un câble 3, de préférence de type Ethernet. Mais, en variante, le raccordement pourrait s'effectuer par voie d'ondes, par exemple par un lien radio de type 802.11b.

Par ailleurs, le réseau privé CN est raccordé, d'une part, au réseau public de téléphonie RTC par l'intermédiaire d'un serveur d'entreprise (ou « Gateway ») 4, et d'autre part, au routeur périphérique 2, par l'intermédiaire d'un routeur IP 5, ayant la fonctionnalité proxy ou pare-feu (« firewall »), et du réseau public de données INTERNET/IP, via, de préférence, un lien de type VPN 6 (pour « Virtual Private Network ») assurant la sécurisation des données par tunnélisation. A la place de ce lien VPN on pourrait utiliser, par exemple, un serveur intermédiaire de type RAS (pour « Remote Access Server ») éventuellement couplé à un routeur de type Gateway.

En outre, l'installation comporte également un ou plusieurs routeurs (ou gateway) 7, d'infrastructures appartenant à des fournisseurs d'accès à Internet (ISP), et chacun raccordés au réseau public de téléphonie RTC et au réseau public de données INTERNET/IP.

Le réseau local est préférentiellement de type sans fil (ou WLAN pour « Wireless Local Area Network »), mais, dans des variantes il pourrait être de type Bluetooth ou UWB (pour « Ultra Wide Band »), ou de type filaire (ou LAN pour « Local Area Network »). Par ailleurs, le réseau privé CN est par exemple de type PABX (pour « Private Automatic Branch Exchange »), éventuellement sans fil (s'il utilise la norme DECT). En outre, le réseau de téléphonie est de préférence de type commuté (ou RTC pour « Réseau Téléphonique Commuté », ou encore PSTN pour « Public Switched Telephony Network »), mais, dans une variante il pourrait s'agir d'un réseau public de type PLMN (pour « Public Land Mobile Network »), comme par exemple les réseaux GSM, GPRS et UMTS. Bien entendu, l'invention n'est pas limitée à ces seuls types de réseaux, ni au nombre de réseaux choisi. On pourrait ainsi faire coexister plusieurs réseaux privés disposant chacun d'un ou plusieurs réseaux locaux, plusieurs réseaux publics de données et plusieurs réseaux publics de téléphonie, ou seulement plusieurs réseaux publics de données et plusieurs réseaux publics de téléphonie.

L'invention est destinée à permettre à des personnes, qui disposent d'un terminal de communications 8 équipé d'une carte (W)LAN 9, amovible ou intégrée, d'accéder à un ou plusieurs réseaux de l'installation, dits réseaux distants, dans des conditions qui seront décrites plus loin, lorsqu'elles se trouvent placées dans la zone de couverture d'un réseau local WLAN.

Dans l'exemple illustré, où le réseau local WLAN est sans fil, les terminaux de communications 8 sont par exemple des téléphones portables (ou mobiles), des micro-ordinateurs portables (ou mobiles), ou des assistants numériques personnels (ou PDA). Chaque terminal de communications 8 possède une adresse MAC (pour « Medium Access Control » - niveau 2 du modèle OSI), qui est généralement placé dans l'en-tête des trames de données qu'il transmet.

Par ailleurs, on définit trois types de terminaux de communications 8. Un premier type est constitué des terminaux mobiles 8a qui appartiennent (ou sont rattachés) à l'entreprise à laquelle appartiennent le réseau local WLAN et le réseau privé CN. Dans le cas d'une entreprise, ces terminaux 8a sont généralement des micro-ordinateurs portables équipés d'une carte WLAN 9 configurée de manière à permettre l'échange de données cryptées avec l'un des points d'accès 1 du réseau local WLAN, selon un premier format, ainsi qu'avec le réseau privé CN, selon un second format. Les premier et second formats sont généralement différents, car il est habituellement prévu que le point d'accès crypte lui-même les trames de données reçues d'un terminal 8a à l'aide d'un algorithme et d'une clé qui lui ont été fournis par le gestionnaire du réseau privé CN. Les adresses MAC de ces terminaux 8a, dites primaires, sont par ailleurs connues de l'entreprise et stockées dans un serveur du réseau privé CN.

Un deuxième type est constitué des terminaux mobiles 8b qui appartiennent généralement à des salariés de l'entreprise ou à des personnes externes travaillant pour l'entreprise, comme par exemple des consultants. Ces terminaux 8b sont généralement des téléphones portables munis d'une carte WLAN intégrée. Mais, cette carte n'est pas configurée de manière à permettre l'échange de données cryptées avec l'un des points d'accès 1 du réseau local WLAN, ou avec le réseau privé CN. Les adresses MAC de ces terminaux 8b, dites secondaires, sont cependant connues de l'entreprise et stockées dans le serveur précité du réseau privé CN.

Un troisième type est constitué des terminaux mobiles 8c qui appartiennent à des personnes étrangères à l'entreprise. Ces terminaux 8c sont des téléphones portables, des PDA ou des micro-ordinateurs, munis d'une carte WLAN. Mais, cette carte n'est pas configurée de manière à permettre l'échange de données cryptées avec l'un des points d'accès 1 du réseau local WLAN, ou avec le réseau privé CN. Les adresses MAC de ces terminaux 8c, dites tertiaires, sont totalement inconnues de l'entreprise.

Afin de permettre aux terminaux 8 (a-c) d'accéder à tout ou partie des réseaux de l'installation, selon leur type, on prévoit un serveur de traitement 10, préférentiellement implanté dans le routeur périphérique 2. En variante, il pourrait être implanté dans l'un des points d'accès du réseau local WLAN.

Lorsqu'un terminal 8 (a-c) se trouve placé dans la zone de couverture du réseau local WLAN et qu'il souhaite établir une liaison avec un réseau distant de l'installation, il transmet au point d'accès 1 une requête de connexion, sous forme d'une trame de données comportant dans son entête son adresse MAC. Si le terminal est un premier terminal 8a, les trames qu'il envoie sont déjà cryptées selon un premier format. A réception, de cette trame cryptée, le point d'accès 1 détermine ou vérifie l'algorithme qu'il doit lui appliquer avec la clé qui lui a été fournie par le gestionnaire du réseau privé CN, pour la transformer en trame cryptée selon un second format.

Il est important de noter que cette détermination peut reposer sur le contenu de l'en-tête de la trame, mais que cela n'est pas obligatoire. En d'autres termes, le point d'accès 1 ne détermine pas, ou ne vérifie pas, forcément l'algorithme qu'il doit appliquer aux trames reçues à partir des données contenues dans ces trames. Par ailleurs, il est important de noter que les trames cryptées selon le premier format et les mêmes trames non cryptées sont traitées par des processus parallèles.

Une fois que le point d'accès 1 a cryptée la trame selon le second format, il la transmet au serveur de traitement 2.

En revanche, si le terminal est un deuxième 8b ou troisième 8c terminal, les trames qu'il envoie ne sont pas cryptées. Par conséquent, dès que le point d'accès 1 reçoit les trames de ces terminaux, il les transmet au serveur de traitement 2.

Le serveur de traitement 10 comporte un module de contrôle 11 qui analyse chaque trame de données transmise par le point d'accès 1. Plus précisément, ce module de contrôle 11 détermine si la trame est cryptée ou non, selon le second format. Si tel est le cas, le module de contrôle 11 classe le terminal qui l'a émise dans un premier groupe correspondant aux premiers terminaux 8a, lesquels sont autorisés à accéder au réseau privé CN et aux différents réseaux publics, ici RTC et Internet/IP. Dans le cas contraire, il classe le terminal qui l'a émise dans un second groupe correspondant aux deuxièmes 8b ou troisièmes 8c terminaux, lesquels ne sont à priori autorisés qu'à accéder aux différents réseaux publics, ici RTC et Internet/IP.

Puis, le module de contrôle 11 attribue, sans les allouer, des ressources du réseau local WLAN au terminal qui tente d'établir une communication (ou liaison) avec les réseaux distants, en fonction de son classement dans le premier ou le second groupe.

Dans un mode de réalisation de base, le traitement se poursuit par la transmission d'instructions par le module de contrôle 11 au point d'accès 1, auquel est connecté le terminal 8 qui a fait la demande de connexion, comportant une demande d'allocation de ressources d'un premier ou d'un second type au terminal selon qu'il s'agit d'un premier terminal 8a ou d'un deuxième 8b ou troisième 8c terminal. Par exemple, les premiers terminaux 8a se voient allouer une large bande passante, tandis que les deuxièmes 8b ou troisième 8c terminaux se voient allouer une bande passante étroite. Les premiers terminaux 8a peuvent alors établir, de façon classique, une connexion avec l'un quelconque des réseaux distants (réseau privé CN, réseau de données Internet/IP ou réseau de téléphonie RTC), tandis que les deuxièmes 8b et troisièmes 8c terminaux ne peuvent établir une connexion qu'avec le réseau de données Internet/IP ou le réseau de téléphonie RTC, comme s'ils s'étaient connectés directement au routeur périphérique 2.

Mais, les niveaux de priorité peuvent porter sur d'autres paramètres que la bande passante. Il pourra s'agir, de droits d'accès à des bases de données locales ou distantes, et notamment à des bases de données d'informations boursières ou météorologiques, ou audio et/ou vidéo, par exemple dans le cadre d'applications de type « video streaming » ou « vidéo à la demande », ou encore à des droits d'accès à des ressources physiques telles que des terminaux dédiés ou des imprimantes.

Le traitement effectué par le serveur de traitement 10, dans ce mode de base, s'arrête donc à ce stade.

Mais, l'invention va plus loin. Elle propose en effet que les seconds terminaux 8b, qui appartiennent généralement à des salariés de l'entreprise, puissent bénéficier de l'accès au réseau privé CN, alors même que leurs terminaux ne sont pas configurés pour transmettre des trames cryptées selon le premier format. A cet effet, le module de contrôle 11 est agencé pour déterminer dans la trame, qui lui est initialement fournie par le point d'accès 1, lors d'une demande de connexion par un terminal 8, et après avoir déterminé si celle-ci était cryptée ou non, l'adresse MAC contenue dans son en-tête. Une fois celle-ci déterminée, le terminal 8 peut adresser une demande d'attribution d'adresse IP au serveur de traitement 10. Celui-ci comporte un module 12 d'attribution d'adresses IP couplé au module de contrôle 11, préférentiellement réalisé sous la forme d'un serveur de type DHCP (pour « Dynamic Host Configuration Protocol »).

Comme le sait l'homme de l'art, un tel module d'attribution DHCP permet de distribuer automatiquement une adresse IP à un terminal (ou équipement) qui veut dialoguer avec des équipements situés à l'extérieur d'un réseau local. Il constitue généralement un sur-ensemble de BOOTP. L'adresse IP, contrairement à l'adresse Internet, permet d'identifier réellement (physiquement) un terminal. Elle est généralement constituée de 4 nombres compris dans l'intervalle [0-255], et séparés par des points. Le rapprochement entre une adresse IP et une adresse Internet est généralement effectué par un serveur de nom de type DNS (pour « Domain Name System »).

Une fois que le module d'attribution 12 a attribué une adresse IP au terminal 8 dont l'adresse MAC a été déterminée par le module de contrôle 11, le terminal peut alors dialoguer avec des équipements situés dans les réseaux distants, s'il est habilité.

Préférentiellement, le serveur de traitement 11 comprend une mémoire 13 dans laquelle est stockée une table contenant des adresses MAC primaires associées à des premiers terminaux 8a, ainsi que, de préférence, des adresses MAC secondaires associées à des seconds terminaux 8b. Cette table lui a été fournie par le gestionnaire du réseau privé CN, de préférence via le lien VPN 6. D'une manière générale, toutes les informations de gestion permettant de configurer le serveur de traitement 10 sont transmises par le gestionnaire du réseau privé CN, de préférence via le lien VPN 6.

Le module de contrôle 11 peut accéder à la mémoire 13 afin de vérifier si l'adresse MAC qu'il a déterminée dans l'en-tête de la trame reçue est une adresse MAC primaire, secondaire ou tertiaire (si elle appartient à un troisième terminal 8c dont l'adresse MAC est inconnue).

Si l'adresse MAC du terminal 8a ou 8b est primaire ou secondaire, le module de contrôle 11 adresse au module d'attribution 12 une requête lui demandant d'attribuer à ce terminal une adresse IP primaire (ou adresse IP d'entreprise) qui va lui permettre d'établir une liaison avec l'un des réseaux distants auxquels le réseau local est couplé via le routeur périphérique 2, y compris le réseau d'entreprise CN. En revanche, si l'adresse MAC du terminal 8c est tertiaire (ou en d'autres termes qu'elle n'appartient pas à la table stockée dans la mémoire 13), le module de contrôle 11 adresse au module d'attribution 12 une requête lui demandant d'attribuer à ce terminal une adresse IP secondaire (ou adresse IP hors entreprise) lui permettant d'établir une liaison avec le réseau Internet/IP via l'infrastructure 7 de son fournisseur d'accès ou avec le réseau de téléphonie RTC, éventuellement via un serveur d'accès téléphonique, et non pas avec le réseau d'entreprise CN puisqu'il n'est pas habilité par celui-ci.

Mais, le module de contrôle 11 peut être également agencé de manière à pouvoir attribuer plusieurs niveaux de priorité d'allocation de ressources du réseau local WLAN selon que la communication est ou non cryptée dans le second format. L'objectif est en effet de privilégier les premiers terminaux 8a par rapport aux seconds terminaux 8b, et les seconds terminaux 8b par rapport aux troisièmes terminaux 8c.

A cet effet, chaque adresse MAC primaire et secondaire de la table est stockée en correspondance d'un niveau de priorité. La table peut par exemple être subdivisée en deux parties l'une contenant les adresses MAC primaires, associées à un premier niveau de priorité, l'autre contenant les adresses MAC secondaires, associées à un second niveau de priorité. Par déduction, les troisièmes terminaux 8c, associés à une adresse MAC tertiaire (inconnue), se voient automatiquement attribuer un troisième niveau de priorité.

Préférentiellement, les niveaux de priorité portent au moins sur la largeur de bande passante qui est attribuée aux terminaux 8. Par exemple, la largeur de la bande passante décroît du premier niveau vers le troisième niveau, de manière à privilégier les premiers terminaux 8a appartenant à l'entreprise par rapport aux seconds terminaux 8b appartenant à des salariés de l'entreprise, ou rattachés à celle-ci, et les seconds terminaux 8b par rapport aux troisièmes terminaux 8c appartenant à des personnes étrangères à l'entreprise. Le niveau de priorité qui est attribué à un terminal 8 est communiqué au point d'accès 1 qui est l'équipement du réseau local WLAN chargé d'allouer ses ressources.

Par ailleurs, afin de tenir compte en temps réel des conditions d'utilisation des ressources du réseau local WLAN, le module de contrôle 11 est préférentiellement capable de modifier de façon dynamique le niveau de priorité qu'il attribue au terminal 8 sur la base des informations contenues dans la table d'adresses. Par exemple, si le module de contrôle 11 a attribué à un second terminal 8b un deuxième niveau de priorité (par exemple correspondant à une bande passante intermédiaire), et que le trafic du réseau local WLAN est faible ou modéré (ce qui correspond à de nombreuses ressources disponibles), il peut décider de changer ce deuxième niveau en un premier niveau (par exemple correspondant à la bande passante la plus large). Dans les mêmes conditions de trafic, le module de contrôle 11 pourra également décider de changer un troisième niveau de priorité attribué à un troisième terminal 8c en un deuxième niveau. Par ailleurs, si le trafic du réseau local WLAN est très faible (ce qui correspond à de très nombreuses ressources disponibles), le module de contrôle 11 peut décider de changer un troisième niveau de priorité attribué à un troisième terminal 8c en un premier niveau.

L'inverse peut également être envisagé. En effet, il peut arriver que le trafic soit très important au niveau d'un réseau local WLAN, et qu'il ne soit pas possible de satisfaire aux besoins de tous les terminaux 8, y compris ceux des premiers terminaux 8a. Par conséquent, le module de contrôle 11 peut être agencé de manière à pouvoir changer un premier niveau de priorité, attribué à un premier terminal 8a, en un deuxième niveau, voire même un troisième niveau (correspondant à la bande passante la moins large). De même, il peut changer un second niveau de priorité, attribué à un second terminal 8b, en un troisième niveau.

En variante ou en complément, on peut envisager de définir des profils d'utilisateurs associés à certaines adresses MAC de la table. Ainsi, lorsque le module de contrôle reconnaît une telle adresse MAC, il peut ordonner au point d'accès d'allouer, au terminal possédant cette adresse MAC, des ressources correspondant au profil associé.

On va maintenant décrire quelques exemples de fonctionnement de l'installation selon l'invention.

Une fois que le module de contrôle 11 a déterminé l'adresse MAC, et éventuellement le niveau de priorité (ou le profil) associé, et que le module d'attribution 12 a attribué une adresse IP au terminal 8, celui-ci peut, s'il s'agit d'un premier 8a ou d'un second 8b terminal, de type micro-ordinateur, accéder classiquement soit au réseau privé CN, via le routeur proxy 5, soit au réseau de données Internet/IP, via le lien VPN 6. Le routeur proxy 5 demande généralement à l'utilisateur du terminal de s'identifier par son login et son mot de passe (ou « password »). Si le premier 8a ou second 8b terminal est un téléphone portable, il est classiquement routé vers le serveur gateway 4 de l'entreprise afin d'être raccordé au réseau de téléphonie RTC ou bien directement au terminal d'un salarié de l'entreprise (via le réseau de téléphonie interne). Si l'utilisateur appelant ne transmet qu'un unique nom, son appel peut être traité par un serveur d'entreprise, de type DNS (pour « Domain Name System »), ou par un répertoire (ou annuaire) d'entreprise, de type LDAP (pour « Lightweight Directory Access Protocol »).

Si le terminal est un troisième terminal 8c, de type micro-ordinateur, il ne peut accéder classiquement qu'au réseau de données Internet/IP, via l'infrastructure 7 de son fournisseur d'accès habituel (ISP). Il peut à cet effet utiliser son navigateur. Pendant la phase d'identification de l'utilisateur du troisième terminal 8c, par l'ISP, ce dernier peut décider de changer l'adresse IP secondaire précédemment attribuée par le module d'attribution 12.

Enfin, si le terminal est un troisième terminal 8c, de type téléphone portable, deux cas peuvent être envisagés. Si le téléphone 8c est de type GSM (ou GPRS ou UMTS) et possède un annuaire local intégré, le routeur périphérique 2 lui attribue une caractéristique de type « média-gateway » (par exemple selon le standard MGCP pour « Media Gateway Control Protocol », de l'IETF) ce qui lui permet d'accéder directement au réseau de téléphonie RTC. Dans le cas contraire, l'appel est routé par le routeur périphérique 2 vers l'infrastructure 7 du fournisseur d'accès (ISP) de l'utilisateur, qui le traite en effectuant classiquement, par exemple, une conversion de nom, une connexion au réseau de téléphonie RTC, et analogue.

Le module de contrôle 11 et le module d'attribution 12 du serveur de traitement 10 selon l'invention peuvent être réalisés sous la forme de circuits électroniques, de modules logiciels (ou informatiques), ou d'une combinaison de circuits et de logiciels.

L'invention offre également un procédé d'attribution de ressources d'un réseau local WLAN (ou LAN) à des terminaux d'utilisateurs 8, via au moins un point d'accès 1.

Celui-ci peut être mis en oeuvre à l'aide du serveur de traitement 10 et de l'installation de communications présentés ci-avant. Les fonctions et sous-fonctions principales et optionnelles assurées par les étapes de ce procédé étant sensiblement identiques à celles assurées par les différents moyens constituant le serveur de traitement 10 et l'installation, seules seront résumées ci-après les étapes mettant en oeuvre les fonctions principales du procédé selon l'invention.

Ce procédé consiste, lorsqu'un terminal 8 tente d'établir une liaison avec le réseau local WLAN, d'une part, à le classer dans un premier ou un second groupe selon que la liaison est ou non cryptée dans au moins un format choisi, et d'autre part, à lui attribuer des ressources du réseau local WLAN en fonction de son classement dans l'un des premier et second groupes.

Avantageusement, lorsqu'un terminal 8 tente d'établir une liaison avec le réseau local WLAN, on détermine son adresse MAC, puis on lui attribue une adresse IP.

Par ailleurs, en présence d'une table d'adresses MAC, on peut déterminer si l'adresse MAC extraite d'une trame reçue est une adresse MAC primaire ou secondaire, et dans l'affirmative attribuer au terminal 8 (a, b) correspondant à cette adresse MAC primaire ou secondaire, une adresse IP primaire lui permettant d'établir une liaison avec au moins un premier réseau distant ou au moins un second réseau distant, et dans la négative attribuer au terminal 8c correspondant à l'adresse MAC, appelé troisième terminal, une adresse IP secondaire lui permettant d'établir une liaison avec au moins un second réseau distant.

En outre, on peut attribuer au moins deux niveaux de priorité d'allocation de ressources du réseau local WLAN, selon que la communication est ou non cryptée dans le format choisi. Dans ce cas, il est avantageux que les adresses MAC de la table soient stockées en correspondance d'au moins un niveau de priorité, un premier niveau de priorité pouvant alors être attribué aux premiers terminaux 8a associés à des adresses MAC primaires et un second niveau de priorité pouvant être attribué aux seconds terminaux 8b associés à des adresses MAC secondaires. On peut également attribuer un troisième niveau de priorité d'allocation de ressources du réseau local aux troisièmes terminaux 8c.

Grâce à l'invention, il est désormais possible de permettre à des personnes qui ne sont pas, à priori, autorisées à accéder à des réseaux distants raccordés à un réseau local, de type LAN ou WLAN, d'accéder malgré tout à certains au moins de ces réseaux distants, sous réserve que le réseau local dispose de suffisamment de ressources disponibles. Cet accès peut être gratuit ou payant. Cela renforce notablement la mobilité des terminaux de communications. De plus, cela permet aux propriétaires de réseaux locaux de mettre à la disposition de tous les utilisateurs potentiels un moyen d'accès à des réseaux de données ou de téléphonie. Ainsi, des localités qui ne disposent pas d'une bonne couverture radio peuvent, en implantant un réseau local de coût modéré, permettre à tous les utilisateurs qui le souhaitent de se connecter au réseau de leur opérateur de téléphonie, voire même à Internet.

En outre, l'invention permet d'instaurer des niveaux de priorité d'attribution des ressources du réseau local, voire même des profils spécifiques d'allocation de ressources, quel que soit le type de ressource considéré, y compris les ressources physiques de type imprimante ou terminal d'accès à des bases de données.

L'invention ne se limite pas aux modes de réalisation de procédé, serveur et installation décrits ci-avant, seulement à titre d'exemple, mais elle englobe toutes les variantes que pourra envisager l'homme de l'art dans le cadre des revendications ci-après.

Ainsi, dans ce qui précède il a été fait référence à des niveaux de priorité portant sur des largeurs de bande passante. Mais, l'invention peut porter sur tout autre niveau de priorité relatif aux modalités d'attribution des ressources d'un réseau local, et notamment à des ressources physiques telles que des imprimantes ou des terminaux permettant d'accéder à des bases de données de tout type, et notamment d'informations boursières ou météorologiques,

De plus, on a décrit une application de l'invention aux réseaux locaux sans fil (de type WLAN). Mais l'invention s'applique également aux réseaux locaux de type Bluetooth ou UWB, ainsi qu'aux réseaux locaux de type LAN.

Par ailleurs, on a décrit une installation dans laquelle le réseau local appartenait à une entreprise ou à un groupe d'entreprises disposant d'un réseau privé (ou premier réseau distant) couplé audit réseau local. Mais, l'invention concerne également les réseaux locaux qui ne sont pas couplés à des réseaux privés. Dans ce cas, le réseau local peut être seulement couplé à un ou plusieurs réseaux de données (ou premier ou second réseau distant) et/ou à un ou plusieurs réseaux de téléphonie (ou premier ou second réseau distant).

En outre, il a été question d'un réseau privé d'entreprise, mais l'invention s'applique à tout type de réseau privé dès lors qu'il est couplé à un réseau local via un serveur de traitement selon l'invention.

Enfin, il a été décrit un serveur de traitement implanté dans un routeur. Mais le serveur de traitement peut être également implanté dans un point d'accès du réseau local.

## Revendications

1. Serveur de traitement (10) pour l'attribution de ressources d'un réseau local (WLAN) à des terminaux d'utilisateurs (8), ledit serveur étant destiné à être couplé à au moins un point d'accès (1) audit réseau local, comportant des moyens de contrôle (11) agencés pour
i) classer, dans un premier ou un second groupe, des terminaux (8) tentant d'établir une communication avec le réseau local au moyen d'une requête de connexion, le classement étant effectué selon que la requête de connexion est cryptée ou non dans au moins un format, et
ii) attribuer des ressources dudit réseau local (WLAN) aux terminaux (8) tentant d'établir une communication avec celui-ci, en fonction de leur classement dans l'un desdits premier et second groupes ;
pour attribuer des ressources dudit réseau local (WLAN) aux terminaux (8) tentant d'établir une communication avec celui-ci, en fonction de leur classement dans l'un desdits premier et second groupes, les moyens de contrôle (11) sont agencés pour attribuer au moins deux niveaux de priorité d'allocation de ressources du réseau local (WLAN) selon leur classement dans l'un desdits premier et second groupes ; et sont agencés pour faire évoluer des niveaux de priorité attribués, en fonction des ressources disponibles dudit réseau local (WLAN).

2. Serveur selon la revendication 1, **caractérisé en ce que** lesdits moyens de contrôle (11) sont agencés pour déterminer l'adresse MAC de chaque terminal (8) tentant d'établir une communication avec ledit réseau local (WLAN), et **en ce qu'**il comprend des moyens (12) pour attribuer une adresse IP audit terminal (8) possédant ladite adresse MAC déterminée.

3. Serveur selon la revendication 2, **caractérisé en ce que** lesdits moyens d'attribution (12) sont de type DHCP.

4. Serveur selon la revendication 2, **caractérisé en ce qu'**il comprend une mémoire (13) dans laquelle est stockée une table contenant des adresses MAC primaires associées à des premiers terminaux (8a) agencés de manière à échanger des trames de données cryptées selon ledit format.

5. Serveur selon la revendication 4, **caractérisé en ce que** ladite table contient des adresses MAC secondaires associées à des seconds terminaux (8b) agencés de manière à échanger des trames de données non cryptées.

6. Serveur selon la revendication 4, **caractérisé en ce que** lesdits moyens de contrôle (11) sont agencés pour déterminer si une adresse MAC extraite d'une trame reçue est une adresse MAC primaire ou secondaire, et dans l'affirmative, pour adresser aux moyens d'attribution (12) une requête d'attribution au terminal (8b), correspondant à ladite adresse MAC primaire ou secondaire, d'une adresse IP primaire destinée à lui permettre d'établir une liaison avec au moins un premier et un second réseaux distants, et dans la négative adresser aux moyens d'attribution (12) une requête d'attribution au terminal (8c), correspondant à ladite adresse MAC, dit troisième terminal, d'une adresse IP secondaire destinée à lui permettre d'établir une liaison avec au moins un second réseau distant.

7. Serveur selon la revendication 4, **caractérisé en ce que** lesdits premiers terminaux (8a) sont rattachés audit premier réseau distant.

8. Serveur selon la revendication 7, **caractérisé en ce que** lesdits seconds terminaux (8b) appartiennent à des utilisateurs connus dudit premier réseau distant.

9. Serveur selon la revendication 6, **caractérisé en ce que** chaque premier réseau distant est choisi dans un groupe comprenant les réseaux privés, les réseaux de données IP et les réseaux de téléphonie (RTC), et **en ce que** chaque second réseau distant est choisi dans un groupe comprenant les réseaux de données IP et les réseaux de téléphonie (RTC).

10. Serveur selon la revendication 1, **caractérisé en ce que** les adresses MAC de ladite table sont stockées en correspondance d'au moins un niveau de priorité.

11. Serveur selon la revendication 10, **caractérisé en ce que** lesdits niveaux de priorité comprennent au moins un premier niveau de priorité attribué aux premiers terminaux (8a) associés à des adresses MAC primaires et un second niveau de priorité attribué aux seconds terminaux (8b) associés à des adresses MAC secondaires.

12. Serveur selon la revendication 11, **caractérisé en ce que** lesdits moyens de contrôle (11) sont agencés pour attribuer un troisième niveau de priorité d'allocation de ressources du réseau local auxdits troisièmes terminaux (8c) établissant des communications non cryptées dans ledit format et dont l'adresse MAC n'appartient pas à ladite table.

13. Serveur selon la revendication 10, **caractérisé en ce que** lesdits niveaux de priorité portent au moins sur une largeur de bande passante, ladite largeur décroissant du premier niveau vers le troisième niveau.

14. Serveur selon la revendication 13, **caractérisé en ce que** lesdits moyens de contrôle (11) sont agencés pour transmettre audit point d'accès (1) des données représentatives de ladite bande passante attribuée à un terminal désigné (8), de sorte que ledit point d'accès alloue les ressources correspondantes audit terminal désigné.

15. Serveur selon la revendication 1, **caractérisé en ce qu'**il est destiné à être couplé audit réseau local (WLAN) par voie filaire (3).

16. Serveur selon la revendication 15, **caractérisé en ce que** ladite voie filaire (3) est un lien Ethernet.

17. Serveur selon la revendication 1, **caractérisé en ce qu'**il est destiné à être couplé audit réseau local (WLAN) par voie d'ondes.

18. Serveur selon la revendication 17, **caractérisé en ce que** ladite voie d'ondes est un lien radio de type 802.11b.

19. Routeur (2), **caractérisé en ce qu'**il comporte un serveur de traitement (10) selon l'une des revendications précédentes.

20. Point d'accès à un réseau local, **caractérisé en ce qu'**il comporte un serveur de traitement (10) selon l'une des revendications 1 à 18.

21. Installation de communications comportant au moins un réseau local (WLAN), accessible via au moins un point d'accès (1), au moins un premier réseau distant, et au moins un second réseau distant, **caractérisée en ce qu'**elle comprend un serveur de traitement (10) selon l'une des revendications 1 à 18, couplé audit point d'accès (1) et auxdits premier et second réseaux distants.

22. Installation selon la revendication 21, **caractérisée en ce que** ledit réseau local (WLAN) est de type sans fil.

23. Installation selon la revendication 21, **caractérisée en ce que** ledit serveur de traitement (10) est couplé audit premier réseau distant (CN) via un réseau privé virtuel (VPN).

24. Installation selon la revendication 21, **caractérisée en ce que** ledit serveur de traitement (10) est couplé audit premier réseau distant (CN) via un serveur d'accès distant.

25. Installation la revendication 21, **caractérisée en ce que** chaque premier réseau distant est choisi dans un groupe comprenant les réseaux privés, les réseaux de données IP et les réseaux de téléphonie (RTC), et **en ce que** chaque second réseau distant est choisi dans un groupe comprenant les réseaux de données IP et les réseaux de téléphonie (RTC).

26. Procédé d'attribution de ressources d'un réseau local (WLAN) à des terminaux d'utilisateurs (8), via au moins un point d'accès (1) audit réseau local, consistant, lors de la tentative d'établissement d'une liaison avec ledit réseau local (WLAN) par un terminal (8), à :
i) classer ledit terminal dans un premier ou un second groupe selon que la requête de connexion pour tenter d'établir la liaison est ou non cryptée dans au moins un format, et
ii) attribuer des ressources dudit réseau local (WLAN) audit terminal (8) en fonction de son classement dans l'un desdits premier et second groupes ; pour attribuer des ressources dudit réseau local (WLAN) audit terminal (8) en fonction de son classement dans l'un desdits premier et second groupes, il consiste à attribuer audit terminal un niveau de priorité choisi parmi au moins deux niveaux de priorité d'allocation de ressources du réseau local (WLAN), selon son classement dans l'un desdits premier et second groupes ; et à faire évoluer un niveau de priorité attribué, en fonction des ressources disponibles dudit réseau local (V1/LAN).

27. Procédé selon la revendication 26, **caractérisé en ce qu'**en cas de tentative d'établissement par un terminal (8) d'une liaison avec ledit réseau local (WLAN), on détermine son adresse MAC, puis on attribue une adresse IP audit terminal possédant ladite adresse MAC déterminée.

28. Procédé selon la revendication 27, **caractérisé en ce que** l'on stocke une table contenant des adresses MAC primaires associées à des premiers terminaux (8a) agencés de manière à échanger des trames de données cryptées selon ledit format.

29. Procédé selon la revendication 28, **caractérisé en ce que** ladite table contient des adresses MAC secondaires associées à des seconds terminaux (8b) agencés de manière à échanger des trames de données non cryptées.

30. Procédé selon la revendication 28, **caractérisé en ce que** l'on détermine si une adresse MAC extraite d'une trame reçue est une adresse MAC primaire ou secondaire, et dans l'affirmative on attribue au terminal (8a, 8b) correspondant à ladite adresse MAC primaire ou secondaire, une adresse IP primaire destinée à lui permettre d'établir une liaison avec au moins un premier et un second réseaux distants, et dans la négative on attribue au terminal (8c) correspondant à ladite adresse MAC, dit troisième terminal, une adresse IP secondaire destinée à lui permettre d'établir une liaison avec au moins un second réseau distant.

31. Procédé selon la revendication 28, **caractérisé en ce que** lesdits premiers terminaux (8a) sont rattachés audit premier réseau distant.

32. Procédé selon la revendication 31, **caractérisé en ce que** lesdits seconds terminaux (8b) appartiennent à des utilisateurs connus dudit premier réseau distant.

33. Procédé selon la revendication 30, **caractérisé en ce que** chaque premier réseau distant est choisi dans un groupe comprenant les réseaux privés, les réseaux de données IP et les réseaux de téléphonie (RTC), et **en ce que** chaque second réseau distant est choisi dans un groupe comprenant les réseaux de données IP et les réseaux de téléphonie (RTC).

34. Procédé selon la revendication 26, **caractérisé en ce que** l'on attribue au moins deux niveaux de priorité d'allocation de ressources du réseau local selon que ladite communication est ou non cryptée dans ledit format.

35. Procédé selon la revendication 34, **caractérisé en ce que** les adresses MAC de ladite table sont stockées en correspondance d'au moins un niveau de priorité.

36. Procédé selon la revendication 35, **caractérisé en ce que** les niveaux de priorité comprennent au moins un premier niveau de priorité attribué aux premiers terminaux (8a) associés à des adresses MAC primaires et un second niveau de priorité attribué aux seconds terminaux (8b) associés à des adresses MAC secondaires.

37. Procédé selon la revendication 36, **caractérisé en ce que** l'on attribue un troisième niveau de priorité d'allocation de ressources du réseau local auxdits troisièmes terminaux (8c) établissant des communications non cryptées dans ledit format et dont l'adresse MAC n'appartient pas à ladite table.

38. Procédé selon la revendication 26, **caractérisé en ce que** lesdits niveaux de priorité portent au moins sur une largeur de bande passante, ladite largeur décroissant du premier niveau vers le troisième niveau.

39. Procédé selon la revendication 38, **caractérisé en ce que** l'on transmet audit point d'accès (1) des données représentatives de ladite bande passante attribuée à un terminal désigné (8), de sorte que ledit point d'accès (1) alloue les ressources correspondantes audit terminal désigné.

40. Utilisation des procédé, routeur, point d'accès, serveur de traitement et installation selon l'une des revendications précédentes dans des réseaux de communications choisis parmi les réseaux publics de type PSTN, PLMN, et Internet (IP), et dans les réseaux privés de type PABX et les passerelles de communication privées.

41. Utilisation selon la revendication 40, **caractérisée en ce que** les réseaux publics PLMN sont des réseaux pour équipements mobiles choisis parmi les réseaux GSM, GPRS et UMTS.

## Claims

1. A processing server (10) for allocating to user terminals (8) resources of a local area network (WLAN), which server is adapted to be connected to at least one local area network access point (1) and includes control means (11) adapted:
i) to classify, into a first group or a second group, terminals (8) attempting to establish communication with the local area network by means of a connection request, the classification being performed according to whether or not the connection request is encrypted in accordance with at least one format; and
ii) to allocate resources of said local area network (WLAN) to the terminals (8) attempting to establish communication therewith as a function of whether they are classified in said first group or said second group;
to allocate resources of said local area network (WLAN) to the terminals (8) attempting to establish communication therewith as a function of whether they are classified in said first group or said second group, the control means (11) are adapted to allocate to at least two levels of priority for allocation of resources of the local area network (WLAN) according to whether they are classified in said first group or said second group; and are adapted to modify the allocated priority levels as a function of the available resources of said local area network (WLAN).

2. A server according to claim 1, **characterized in that** said control means (11) are adapted to determine the MAC address of each terminal (8) attempting to establish communication with said local area network (WLAN) and **in that** it includes means (12) for allocating an IP address to the terminal (8) having the MAC address determined in this way.

3. A server according to claim 2, **characterized in that** said allocation means (12) are of the DHCP type.

4. A server according to claim 2, **characterized in that** it includes a memory (13) for storing a table containing primary MAC addresses associated with first terminals (8a) adapted to exchange data frames encrypted in accordance with said format.

5. A server according to claim 4, **characterized in that** said table contains secondary MAC addresses associated with second terminals (8b) adapted to exchange unencrypted data frames.

6. A server according to claim 4, **characterized in that** said control means (11) are adapted to determine if a MAC address extracted from a received frame is a primary or secondary MAC address and, if so, to send the allocation means (12) a request to allocate the terminal (8b) corresponding to said primary or secondary MAC address a primary IP address so that it can set up a link with at least one first remote network and one second remote network and, if not, to send the allocation means (12) a request to allocate the terminal (8c) corresponding to said MAC address, referred to as a third terminal, a secondary IP address so that it can set up a connection with at least one second remote terminal.

7. A server according to claim 4, **characterized in that** said first terminals (8a) are associated with said first remote network.

8. A server according to claim 7, **characterized in that** said terminals (8b) belong to known users of said first remote network.

9. A server according to claim 6, **characterized in that** each first remote network is selected from the group comprising private networks, IP data networks, and public switched telephone networks (PSTN), and **in that** each second remote network is selected from the group comprising IP data networks and public switched telephone networks (PSTN).

10. A server according to claim 1, **characterized in that** the MAC addresses in said table are stored in corresponding relationship to at least one priority level.

11. A server according to claim 10, **characterized in that** said priority levels comprise at least one first priority level allocated to first terminals (8a) associated with primary MAC addresses and one second priority level allocated to second terminals (8b) associated with secondary MAC addresses.

12. A server according to claim 11, **characterized in that** said control means (11) are adapted to allocate a third priority level for allocation of resources of the local area network to said third terminals (8c) setting up communications not encrypted in accordance with said chosen format and whose MAC address is not in said table.

13. A server according to claim 10, **characterized in that** said priority levels apply at least to a bandwidth and said bandwidth decreases from the first level to the third level.

14. A server according to claim 13, **characterized in that** said control means (11) send said access point (1) data representative of said bandwidth assigned to a designated terminal (8) and said access point allocates the corresponding resources to said designated terminal.

15. A server according to claim 1, **characterized in that** it is adapted to be connected to said local area network (WLAN) by a cable connection (3).

16. A server according to claim 15, **characterized in that** said cable connection (3) is an Ethernet link.

17. A server according to claim 1, **characterized in that** it is adapted to be connected to said local area network (WLAN) by a radio link.

18. A server according to claim 17, **characterized in** said radio link is a 802.11 b radio link.

19. A router (2), **characterized in that** it includes a processing server (10) according to any one of the preceding claims.

20. A local area network access point, **characterized in that** it includes a processing server (10) according to any one of claims 1 to 18.

21. A communication installation including at least one local area network (WLAN) accessible via at least one access point (1), at least one first remote network, and at least one second remote network, which installation is **characterized in that** it includes a processing server (10) according to any one of claims 1 to 18 connected to said access point (1) and to said first and second remote networks.

22. An installation according to claim 21, **characterized in that** said local area network (WLAN) is a wireless local area network.

23. An installation according to claim 21, **characterized in that** said processing server (10) is connected to said first remote network (CN) via a virtual private network (VPN).

24. An installation according to claim 21, **characterized in that** said processing server (10) is connected to said first remote network (CN) via a remote access server.

25. An installation according to claim 21, **characterized in that** each first remote network is chosen from the group comprising private networks, IP data networks, and public switched telephone networks (PSTN) and **in that** each second remote network is selected from the group comprising IP data networks and public switched telephone networks (PSTN).

26. A method of allocating resources of a local area network (WLAN) to user terminals (8) via at least one access point (1) to said local area network, which method consists, during an attempt at setting up a connection with said local area network (WLAN) by a terminal (8), in:
i) classifying said terminal in a first group or a second group according to whether the connection request for attempting to establish the connection is encrypted in accordance with at least one format or not, and
ii) allocating resources of said local area network (WLAN) to said terminal (8) as a function of whether it is classified in said first group or said second group;
to allocate resources of said local area network (WLAN) to said terminal (8) as a function of whether it is classified in said first group or said second group, the method consists in allocating to said terminal a level of priority selected from at least two levels of priority for allocation of resources of the local area network (WLAN) according to whether the terminal is classified in said first group or said second group; and in modifying an allocated priority level as a function of the available resources of said local area network (WLAN).

27. A method according to claim 26, **characterized in that** in the event of an attempt by a terminal (8) to set up a connection with said local area network (WLAN), its MAC address is determined and an IP address is then allocated to the terminal having the MAC address determined in this way.

28. A method according to claim 27, **characterized in that** a table is provided containing primary MAC addresses associated with first terminals (8a) adapted to exchange data frames encrypted in accordance with said chosen format.

29. A method according to claim 28, **characterized in that** said table contains secondary MAC addresses associated with second terminals (8b) adapted to exchange unencrypted data frames.

30. A method according to claim 28, **characterized in that** it determines if a MAC address extracted from a received frame is a primary or secondary MAC address and, if so, it allocates the terminal (8a, 8b) corresponding to said primary or secondary MAC address a primary IP address so that it can set up a connection with at least one first remote network and one second remote network and, if not, it allocates the terminal (8c) corresponding to said MAC address, referred to as a third terminal, a secondary IP address so that it can set up a connection with a least one second remote network.

31. A method according to claim 28, **characterized in that** said first terminals (8a) are associated with said first remote network.

32. A method according to claim 31, **characterized** n that said second terminals (8b) belong to known users of said first remote network.

33. A method according to claim 30, **characterized in that** each first remote network is selected from the group comprising private networks, IP data networks, and public switched telephone networks (PSTN) and **in that** each second remote network is selected from the group comprising IP data networks and public switched telephone networks (PTSN).

34. A method according to claim 26, **characterized in that** at least two levels of priority for allocation of resources of the local area network are allocated according to whether communications are encrypted in accordance with said chosen format or not.

35. A method according to claim 34, **characterized in that** the MAC addresses in said table are stored in corresponding relationship to at least one priority level.

36. A method according to claim 35, **characterized in that** the priority levels comprise at least one first priority level allocated to first terminals (8a) associated with primary MAC addresses and at least one second priority level allocated to second terminals (8b) associated with secondary MAC addresses.

37. A method according to claim 36, **characterized in that** a third priority level for allocation of resources of the local area network is allocated to said third terminals (8c) setting up communications that are not encrypted in accordance said format and whose MAC address is not in said table.

38. A method according to claim 26, **characterized in that** said priority levels relate at least to a bandwidth and said bandwidth decreases from the first level to the third level.

39. A method according to claim 38, **characterized in that** said access point (1) is sent data representative of the bandwidth assigned to a designated terminal (8) and said access point (1) allocates the corresponding resources to said designated terminal.

40. Use of a method, a router, an access point, a processing server and an installation according to any one of the preceding claims in communication networks selected from the group comprising PSTN, PLMN and Internet (IP) public networks and PABX private networks and private communication gateways.

41. Use according to claim 40, **characterized in that** the PLMN public networks are mobile networks selected from the group comprising GSM, GPRS and UMTS networks.

## Patentansprüche

1. Bearbeitungsserver (10) für die Zuteilung von Netzwerkressourcen (WLAN) an Nutzerendgeräte (8), wobei dieser Server an mindestens einen Zugang (1) zu diesem lokalen Netzwerk gekoppelt werden soll, und Steuerungsmittel (11) enthält, die aufgebaut sind, um
i) die Endgeräte (8), die versuchen, eine Verbindung mit dem lokalen Netzwerk mittels einer Verbindungsanforderung aufzubauen, in eine erste oder eine zweite Gruppe einzustufen, wobei die Einstufung danach erfolgt, ob die Verbindungsanforderung in mindestens einem Format verschlüsselt ist oder nicht, und
ii) Ressourcen dieses lokalen Netzwerks (WLAN) an Endgeräte (8) zuzuteilen, die versuchen eine Verbindung mit diesem aufzubauen, in Abhängigkeit von ihrer Einstufung in die erste oder zweite Gruppe;
zur Zuteilung der Ressourcen dieses lokalen Netzwerks (WLAN) an die Endgeräte (8), die versuchen eine Verbindung mit diesem aufzubauen, in Abhängigkeit von ihrer Einstufung in diese erste oder zweite Gruppe, sind die Steuerungsmittel (11) so aufgebaut, dass sie mindestes zwei Prioritätsstufen für die Zuweisung von Ressourcen des lokalen Netzwerks (WLAN) gemäß ihrer Einstufung in die erste oder zweite Gruppe zuteilen; und sie sind so aufgebaut, dass zugeteilte Prioritätsstufen in Abhängigkeit von den verfügbaren Ressourcen dieses lokalen Netzwerks (WLAN) geändert werden.

2. Server gemäß Anspruch 1, **dadurch gekennzeichnet, dass** diese Steuerungsmittel (11) so aufgebaut sind, dass sie die MAC-Adresse jedes Endgeräts (8) ermitteln, das versucht, eine Verbindung mit diesem lokalen Netzwerk (WLAN) aufzubauen, und **dadurch gekennzeichnet, dass** er Mittel (12) enthält, um diesem Endgerät (8), welches diese ermittelte MAC-Adresse besitzt, eine IP-Adresse zuzuteilen.

3. Server gemäß Anspruch 2, **dadurch gekennzeichnet, dass** diese Mittel zur Zuteilung (12) vom Typ DHCP sind.

4. Server gemäß Anspruch 2, **dadurch gekennzeichnet, dass** er einen Speicher (13) enthält, in dem eine Tabelle gespeichert ist, die primäre MAC-Adressen enthält, die zu ersten Endgeräten (8a) gehören, die so aufgebaut sind, dass sie gemäß diesem Format verschlüsselte Datenrahmen austauschen.

5. Server gemäß Anspruch 4, **dadurch gekennzeichnet, dass** diese Tabelle sekundäre MAC-Adressen enthält, die zu zweiten Endgeräten (8b) gehören, die so aufgebaut sind, dass sie unverschlüsselte Datenrahmen austauschen.

6. Server gemäß Anspruch 4, **dadurch gekennzeichnet, dass** diese Steuerungsmittel (11) so aufgebaut sind, dass sie ermitteln, ob eine MAC-Adresse, die aus einem empfangenen Rahmen herausgezogen wurde, eine primäre oder eine sekundäre MAC-Adresse ist, und falls dem so ist, an die Zuteilungsmittel (12) eine Anforderung richten, dahingehend, dass dem Endgerät (8b), das dieser primären oder sekundären MAC-Adresse entspricht, eine primäre IP-Adresse zugeteilt wird, die es ihm ermöglichen soll, eine Verbindung mit mindestens einem ersten und einem zweiten entfernten Netz aufzubauen, und falls dem nicht so ist, an die Zuteilungsmittel (12) eine Anforderung richten, dahingehend, dass dem Endgerät (8c), das dieser MAC-Adresse entspricht und als drittes Endgerät bezeichnet wird, eine sekundäre IP-Adresse zugeteilt wird, die es ihm ermöglichen soll, eine Verbindung mit mindestens einem zweiten entfernten Netz aufzubauen.

7. Server gemäß Anspruch 4, **dadurch gekennzeichnet, dass** diese ersten Endgeräte (8a) zu diesem ersten entfernten Netz gehören.

8. Server gemäß Anspruch 7, **dadurch gekennzeichnet, dass** diese zweiten Endgeräte (8b) Nutzern gehören, die dem ersten entfernten Netz bekannt sind.

9. Server gemäß Anspruch 6, **dadurch gekennzeichnet, dass** jedes erste entfernte Netz aus einer Gruppe ausgewählt wird, welche die privaten Netze, die Datennetze IP und die Telefonnetze (RTC) enthält, und **dadurch gekennzeichnet, dass** jedes zweite entfernte Netz aus einer Gruppe ausgewählt wird, welche die Datennetze IP und die Telefonnetze (RTC) enthält.

10. Server gemäß Anspruch 1, **dadurch gekennzeichnet, dass** die MAC-Adressen dieser Tabelle in Entsprechung mit mindestens einer Prioritätsstufe gespeichert werden.

11. Server gemäß Anspruch 10, **dadurch gekennzeichnet, dass** diese Prioritätsstufen mindestens eine erste Prioritätsstufe enthalten, die den ersten Endgeräten (8a), die zu primären MAC-Adressen zugehörig sind, zugeteilt wird, und eine zweite Prioritätsstufe, die den zweiten Endgeräten (8b), die zu sekundären MAC-Adressen zugehörig sind, zugeteilt wird.

12. Server gemäß Anspruch 11, **dadurch gekennzeichnet, dass** diese Steuerungsmittel (11) so aufgebaut sind, dass sie eine dritte Prioritätsstufe für die Zuweisung von lokalen Netzwerkressourcen an diese dritten Endgeräte (8c) zuteilen, welche unverschlüsselte Verbindungen in diesem Format aufbauen und deren MAC-Adresse nicht zu dieser Tabelle gehört.

13. Server gemäß Anspruch 10, **dadurch gekennzeichnet, dass** diese Prioritätsstufen sich mindestens auf eine Durchlassbereichsbreite beziehen, wobei diese Breite von der ersten Stufe zur dritten Stufe hin abnimmt.

14. Server gemäß Anspruch 13, **dadurch gekennzeichnet, dass** diese Steuerungsmittel (11) so aufgebaut sind, dass sie an diesen Zugang (1) Daten übertragen, die repräsentativ sind für diesen Durchlassbereich, der einem bezeichneten Endgerät (8) zugewiesen wurde, so dass dieser Zugang diesem bezeichneten Endgerät die entsprechenden Ressourcen zuweist.

15. Server gemäß Anspruch 1, **dadurch gekennzeichnet, dass** er an dieses lokale Netzwerk (WLAN) per Drahtkanal (3) gekoppelt werden soll.

16. Server gemäß Anspruch 15, **dadurch gekennzeichnet, dass** dieser Drahtkanal (3) eine Ethernet-Verbindung ist.

17. Server gemäß Anspruch 1, **dadurch gekennzeichnet, dass** er per Wellenkanal an dieses lokale Netzwerk (WLAN) gekoppelt werden soll.

18. Server gemäß Anspruch 17, **dadurch gekennzeichnet, dass** dieser Wellenkanal eine Funkverbindung vom Typ 802.1 1b ist.

19. Router (2), **dadurch gekennzeichnet, dass** er einen Bearbeitungsserver (10) gemäß einem der vorstehenden Ansprüche enthält.

20. Zugang zu einem lokalen Netzwerk, **dadurch gekennzeichnet, dass** er einen Bearbeitungsserver (10) gemäß einem der Ansprüche 1 bis 18 enthält.

21. Kommunikationsanlage, die mindestens ein lokales Netzwerk (WLAN) enthält, das über mindestens einen Zugang (1) zugänglich ist, mindestens ein erstes entferntes Netz, und mindestens ein zweites entferntes Netz, **dadurch gekennzeichnet, dass** sie einen Bearbeitungsserver (10) gemäß einem der Ansprüche 1 bis 18 enthält, der an diesen Zugang (1) und an dieses erste und zweite entfernte Netz gekoppelt ist.

22. Anlage gemäß Anspruch 21, **dadurch gekennzeichnet, dass** dieses lokale Netzwerk (WLAN) vom drahtlosen Typ ist.

23. Anlage gemäß Anspruch 21, **dadurch gekennzeichnet, dass** dieser Bearbeitungsserver (10) an dieses erste entfernte Netz (CN) via ein virtuelles privates Netz (VPN) gekoppelt ist.

24. Anlage gemäß Anspruch 21, **dadurch gekennzeichnet, dass** dieser Bearbeitungsserver (10) an dieses erste entfernte Netz (CN) über einen entfernten Zugangsserver gekoppelt ist.

25. Anlage gemäß Anspruch 21, **dadurch gekennzeichnet, dass** jedes erste entfernte Netz aus einer Gruppe ausgewählt wird, die die privaten Netze, die Datennetze IP und die Telefonnetze (RTC) enthält, und **dadurch gekennzeichnet, dass** jedes zweite entfernte Netz aus einer Gruppe ausgewählt wird, welche die Datennetze IP und die Telefonnetze (RTC) enthält.

26. Verfahren für die Zuteilung von Netzwerkressourcen (WLAN) an Nutzerendgeräte (8), via mindestens einen Zugang (1) zu diesem lokalen Netzwerk, das beim Versuch des Aufbaus einer Verbindung mit diesem lokalen Netzwerk (WLAN) durch ein Endgerät (8) darin besteht:
i) dieses Endgerät in eine erste oder eine zweite Gruppe einzustufen, je nachdem, ob die Verbindungsanforderung für den Versuch die Verbindung aufzubauen in mindestens einem Format verschlüsselt ist oder nicht, und
ii) Ressourcen dieses lokalen Netzwerks (WLAN) an dieses Endgerät (8) zuzuteilen, in Abhängigkeit von seiner Einstufung in die erste oder zweite Gruppe; zur Zuteilung der Ressourcen dieses lokalen Netzwerks (WLAN) an dieses Endgerät (8) in Abhängigkeit von seiner Einstufung in diese erste oder zweite Gruppe, besteht es darin, diesem Endgerät eine Prioritätsstufe zuzuteilen, die ausgewählt wird aus mindestens zwei Prioritätsstufen für die Zuweisung von Ressourcen des lokalen Netzwerks (WLAN) gemäß seiner Einstufung in die erste oder zweite Gruppe; und eine zugeteilte Prioritätsstufe in Abhängigkeit von den verfügbaren Ressourcen dieses lokalen Netzwerks (WLAN) zu ändern.

27. Verfahren gemäß Anspruch 26, **dadurch gekennzeichnet, dass** man bei dem Versuch eines Endgeräts (8) eine Verbindung mit diesem lokalen Netzwerk (WLAN) aufzubauen, dessen MAC-Adresse ermittelt, dann diesem Endgerät, welches die ermittelte MAC-Adresse besitzt, eine IP-Adresse zuteilt.

28. Verfahren gemäß Anspruch 27, **dadurch gekennzeichnet, dass** man eine Tabelle speichert, die primäre MAC-Adressen enthält, die zu ersten Endgeräten (8a) gehören, die so aufgebaut sind, dass sie gemäß diesem Format verschlüsselte Datenrahmen austauschen.

29. Verfahren gemäß Anspruch 28, **dadurch gekennzeichnet, dass** diese Tabelle sekundäre MAC-Adressen enthält, die zu zweiten Endgeräten (8b) zugehörig sind, die so aufgebaut sind, dass unverschlüsselte Datenrahmen ausgetauscht werden.

30. Verfahren gemäß Anspruch 28, **dadurch gekennzeichnet, dass** man ermittelt, ob eine MAC-Adresse, die aus einem empfangenen Rahmen herausgezogen wurde, eine primäre oder eine sekundäre MAC-Adresse ist, und falls dem so ist, man diesem Endgerät (8a, 8b), das dieser primären oder sekundären MAC-Adresse entspricht, eine primäre IP-Adresse zuteilt, die es ihm ermöglichen soll, eine Verbindung mit mindestens einem ersten und einem zweiten entfernten Netz aufzubauen, und falls dem nicht so ist, man dem Endgerät (8c), das dieser MAC-Adresse entspricht und als drittes Endgerät bezeichnet wird, eine sekundäre IP-Adresse zuteilt, die es ihm ermöglichen soll, eine Verbindung mit mindestens einem zweiten entfernten Netz aufzubauen.

31. Verfahren gemäß Anspruch 28, **dadurch gekennzeichnet, dass** diese ersten Endgeräte (8a) zu diesem ersten entfernten Netz gehören.

32. Verfahren gemäß Anspruch 31, **dadurch gekennzeichnet, dass** diese zweiten Endgeräte (8b) Nutzern gehören, die diesem ersten entfernten Netz bekannt sind.

33. Verfahren gemäß Anspruch 30, **dadurch gekennzeichnet, dass** jedes erste entfernte Netz aus einer Gruppe ausgewählt wird, welche die privaten Netze, die Datennetze IP und die Telefonnetze (RTC) enthält, und **dadurch gekennzeichnet, dass** jedes zweite entfernte Netz aus einer Gruppe ausgewählt wird, welche die Datennetze IP und die Telefonnetze (RTC) enthält.

34. Verfahren gemäß Anspruch 26, **dadurch gekennzeichnet, dass** man mindestens zwei Prioritätsstufen für die Zuweisung von Ressourcen des lokalen Netzwerks zuteilt, je nachdem, ob diese Verbindung in diesem Format verschlüsselt ist oder nicht.

35. Verfahren gemäß Anspruch 34, **dadurch gekennzeichnet, dass** die MAC-Adressen aus dieser Tabelle in Entsprechung mit mindestens einer Prioritätsstufe gespeichert sind.

36. Verfahren gemäß Anspruch 35, **dadurch gekennzeichnet, dass** die Prioritätsstufen mindestens eine erste Prioritätsstufe enthalten, die den ersten Endgeräten (8a), die zu primären MAC-Adressen zugehörig sind, zugeteilt wird, und eine zweite Prioritätsstufe, die den zweiten Endgeräten (8b), die zu sekundären MAC-Adressen zugehörig sind, zugeteilt wird.

37. Verfahren gemäß Anspruch 36, **dadurch gekennzeichnet, dass** man eine dritte Prioritätsstufe für die Zuweisung von lokalen Netzwerkressourcen an diese dritten Endgeräte (8c) zuteilt, welche unverschlüsselte Verbindungen in diesem Format aufbauen und deren MAC-Adresse nicht zu dieser Tabelle gehört.

38. Verfahren gemäß Anspruch 26, **dadurch gekennzeichnet, dass** diese Prioritätsstufen sich mindestens auf eine Durchlassbereichsbreite beziehen, wobei diese Breite von der ersten Stufe zur dritten Stufe hin abnimmt.

39. Verfahren gemäß Anspruch 38, **dadurch gekennzeichnet, dass** man an diesen Zugang (1) Daten übertragt, die repräsentativ sind für diesen Durchlassbereich, der einem bezeichneten Endgerät (8) zugewiesen wurde, so dass dieser Zugang (1) diesem bezeichneten Endgerät die entsprechenden Ressourcen zuweist.

40. Benutzung von Verfahren, Router, Zugang, Bearbeitungsserver und Anlage gemäß einem der vorstehenden Ansprüche in Kommunikationsnetzen, die ausgewählt werden aus den öffentlichen Netzen vom Typ PSTN, PLMN und Internet (IP), und aus privaten Netzen vom Typ PABX und privaten Kommunikations-Gateways.

41. Benutzung gemäß Anspruch 40, **dadurch gekennzeichnet, dass** die öffentlichen PLMN-Netze Netze für mobile Ausrüstungen sind, die ausgewählt werden aus den GSM-, GPRS- und UMTS-Netzen.
